# EUROPÄISCHE PATENTSCHRIFT

(11) **EP 2 002 142 B1**
(45) Veröffentlichungstag und Bekanntmachung des Hinweises auf die Patenterteilung: **19.05.2010**
(21) Anmeldenummer: 07723725.3
(22) Anmeldetag: 29.03.2007
(51) Int. Cl.: F16D 59/02, F16D 63/00, F16D 65/14

(54) **SICHERHEITSBREMSE**
SAFETY BRAKE
FREIN DE SECURITE

(30) Priorität: 06.04.2006 DE 102006016611
(43) Veröffentlichungstag der Anmeldung: 17.12.2008
(73) Patentinhaber: Ortlinghaus Gmbh Gams, 9473 Gams SG (CH)
(72) Erfinder: MELLER, Udo, 42929 Wermelskirchen (DE); RADOCZAI, Gerhard, 6850 Dornbirn (AT)
(74) Vertreter: Füssel, Michael
(86) Internationale Anmeldenummer: PCT/EP2007/002781
(87) Internationale Veröffentlichungsnummer: WO 2007/115692

(56) Entgegenhaltungen:
- DE-A1- 19 752 543
- DE-A1- 19 807 654
- US-A- 3 045 782
- US-A- 3 400 797
- US-A- 5 102 613
- US-A- 5 185 542

## Beschreibung

Die vorliegende Erfindung betrifft eine Sicherheitsbremse nach Oberbegriff des Hauptanspruchs.

Derartige Sicherheitsbremsen sind bekannt. Siehe z.B. www.ortlinghaus.com.

Bei derartigen Sicherheitsbremsen wird zwischen einem am Maschinengestell festgelegten Bremsstator und einem darin beweglich gelagerten Bremsrotor ein Kupplungsstück verschoben.

Das Kupplungsstück ist einerseits innerhalb des möglichen Verschiebeweges an Bremsrotor oder Bremsstator drehmitnahmefest gelagert und greift auf geeignete Weise in einen korrespondierend ausgebildeten Bereich des Bremsstators bzw. Bremsrotors dann ein, wenn dieses in die Bremsstellung verschoben ist.

Ohne Einschränkung der Erfindung wird zur Vereinfachung der Beschreibung im Folgenden davon ausgegangen, dass das Kupplungsstück am Bremsstator verschieblich und drehmitnahmefest gelagert ist und formschlüssig in einen korrespondierenden Bereich des Bremsrotors dann eingreift, wenn sich dieses in der Bremsstellung befindet.

Das Kupplungsstück befindet sich daher einerseits in ständigem drehmitnahmefestem Formschlußkontakt mit dem Bremsstator unabhängig von der verschiebeposition, in welcher es sich aktuell befindet während der drehmitnahmefeste Formschlußkontakt mit dem Bremsrotor nur dann vorliegt, wenn sich dieses in der Bremsstellung befindet.

Dann, und nur dann, ist zwischen Bremsrotor und Bremsstator eine absolut drehfeste formschlüssige Verbindung gegeben.

Darüber hinaus liegt im vorliegenden Fall eine sogenannte Sicherheitsbremse vor.

Hierunter ist zu verstehen, dass das Kupplungsstück im ungelüfteten Zustand der Bremse zwangsläufig durch eine vorgegebene Federvorlast in die Bremsstellung verlagert ist und nur durch aktive Betätigung einer Lüftungsvorrichtung in die Freigabestellung gelangt.

Derartige Sicherheitsbremsen finden in vielen Bereichen der Technik Anwendung.

Sie dienen dem Zweck, in einer vorgegebenen technischen Anwendung zwingend einen Bremseffekt in einer der beiden Endpositionen des Kupplungsstücks herbeizuführen, die ausschließlich aktiv durch von außen aktivierten Kraftgeber gelöst werden kann.

Derartige Kraftgeber können z.B. hydraulisch betätigte Kolben-Zylinder-Einheiten sein, die zum Lösen der Bremse gelüftet werden und bei Druckverlust von der Federvorlast überwunden werden, so dass die Sicherheitsbremse dann zwangsläufig schließt.

Der hydraulische Bauaufwand ist bei derartigen Sicherheitsbremsen zwar gang und gäbe, wünschenswert ist jedoch eine derartige Sicherheitsbremse von vereinfachtem Bauaufwand, die darüber hinaus in ihrer als Freigabestellung bezeichneten Endstellung, in welcher das Kupplungsstück auf seinem Verschiebeweg der Bremsstellung gegenüberliegt, ebenfalls eindeutig und sicher gehalten wird.

Dokument DE 197 52 543 A1 offenbart eine Sicherheitsbremse gemäß dem Oberbegriff von Anspruch 1.

Es ist daher Aufgabe der vorliegenden Erfindung, die Sicherheitsbremse so auszugestalten, dass bei vereinfachter Bauweise das Kupplungsstück in der einen Endstellung, in der die Bremse gelüftet ist, eindeutig gehalten und trotzdem leicht lösbar ist, sobald die Sicherheitsfunktion einsetzen soll.

Diese Aufgabe löst die Erfindung mit den Merkmalen des Hauptanspruchs.

Aus der Erfindung ergibt sich der Vorteil, dass allein durch Aufhebung der in der Freigabestellung auf das Kupplungsstück wirkenden Haltekraft die Sicherheitsfunktion einsetzt.

Mit einsetzender Sicherheitsfunktion überwiegt die Vorlastkraft der Vorlastfeder auf das Kupplungsstück und die Sicherheitsfunktion wird zwangsläufig erreicht.

Die Haltekraft des Haltekraftgebers ist deshalb zwecksmäßigerweise so bemessen, dass unter Berücksichtigung der im normalen Betrieb auftretenden Kräfte und Beschleunigungen das Kupplungsstück in der als Freigabestellung bezeichneten Endstellung sicher gehalten wird.

Wird jedoch die Haltekraft entweder nur kurzzeitig aufgehoben oder durch eine entgegengesetzt gerichtete Verriegelungskraft überwunden, tritt das System der Vorlastfedern in Aktion und verlagert das Kupplungsstück sicher in die Bremsstellung.

Durch die Erfindung wird daher eine Sicherheitsbremse mit zwei definierten Endstellungen geschaffen, von denen das zwischen Bremsrotor und Bremsstator bewegliche Kupplungsstück in jeder der Endstellungen stabil gehalten wird.

Auf diese Weise entsteht eine Sicherheitsbremse mit bistabiler Endfunktion. Als magnetischer Haltekraftgeber dient ein feromagnetischer Permanentmagnet, da dieser keinerlei Energieaufwand benötigt.

Zur Verlagerung des Kupplungsstücks von der Freigabestellung in die Bremsstellung sind wenigstens zwei unterschiedliche Verriegelungs Kraftgeber vorgesehen, die parallel und voneinander unabhängig am kupplungsstück angreifen und von denen einer als Handbetätigung ausgebildet ist.

Um bereits nur mit baukleinen magnetischen Haltekraftgebern arbeiten zu können, wird ergänzend vorgeschlagen, dass das Kupplungsstück in der als Freigabestellung bezeichneten Endstellung an einer Haltefläche des Bremsstators unter Kontakt anliegt, welche von den magnetischen Feldlinien des magnetischen Haltekraftgebers durchflossen wird.

Die bündige Flächenanlage zwischen dem Kupplungsstück und der Haltefläche des Bremsstators verlangt nämlich nach einer hohen auslösenden Kraft, um die magnetische Haltekraft zu überwinden und dient folglich einer stabilen Einhaltung der Endposition des Kupplungsstücks.

Dabei kann die Verlagerung des Kupplungsstücks sowohl in die Entriegelungsstellung als auch in die Verriegelungsstellung durch jeweils einen einzigen Kraftimpuls erzielt werden.

Der Kraftimpuls wird nach Zeitdauer und Größe so bemessen, daß das Kupplungsstück die jeweils vorgesehene Endstellung zuverlässig erreicht und in dieser dann auch gehalten wird.

In der Haltestellung wirkt allerdings der Kraftimpuls nicht mehr, sondern lediglich noch die Haltekraft des magnetischen Haltekraftgebers.

Kurze Kraftimpulse können durch elektromagnetische Spulenkörper erzeugt werden, die nur kurzzeitig an einen entsprechend ausgelegten Stromkreis angeschlossen sein müssen.

Durch einen entsprechenden Stromimpuls wird die jeweils zur Verlagerung des Kupplungskörpers gewünschte Kraft erzeugt, die impulsartig am Kupplungskörper angreift und ihn in die gewünschte Endposition verlagert.

Damit darüber hinaus eine gleichzeitige Ansteuerung beider Spulen, also eine Ansteuerung von Entriegelungsspule und Verriegelungsspule, zu keiner Änderung der aktuellen Position des Kupplungsstücks führt, wird vorgeschlagen, dass die magnetischen Felder im wesentlichen gleich groß, jedoch von sich gegenseitig neutralisierender Wirkung sind.

Dies kann durch eine einzige Spulenanordnung geschehen, die sowohl die Entriegelungsspule als auch die Verriegelungsspule beinhaltet.

In den Ausführungsbeispielen sind voneinander getrennte Spulen für die Entriegelung und die verriegelung vorgesehen.

Darüber hinaus kann vorgesehen sein, z.B. aus Sicherheitsgründen, ergänzend zu dem Entriegelungskraftgeber einen weiteren Entriegelungskraftgeber vorzusehen, mit dessen Hilfe ein Lüften, d.h. Lösen der Bremse ebenfalls möglich ist.

Beide Entriegelungskraftgeber sollten deshalb voneinander unabhängig am Kupplungsstück angreifen.

Der jeweils ergänzende Entriegelungskraftgeber kann in einem Ausführungsbeispiel als Handbetätigung ausgebildet sein und verfügt deshalb über eine entsprechende Handhabe.

Darüber hinaus lässt sich auch eine einzige Handbetätigung für beide Richtungen vorsehen.

Hierfür sind Ausführungsbeispiele angegeben.

Die Verbindung zwischen Handbetätigung und Kupplungsstück erfolgt zweckmäßigerweise über ein Gestänge oder bevorzugt über einen Bodenzug.

Dies gilt sinngemäß auch für den zweiten verriegelungskraftgeber.

Will man darüber hinaus eine derartige Sicherheitsbremse trotz kleinen Bauvolumens mit großen Haltekräften erzeugen, wird vorgeschlagen, dass die Verzahnung zwischen dem Kupplungsstück und dem Bremsrotor in Form von Sägezähnen ausgebildet ist, die in der Halterichtung des Bremsrotors eine steile Flanke aufweisen, während die in Gegenrichtung wirkende Zahnflanke flach sein kann.

Je steiler die steile Zahnflanke ist, um so höher werden bei geringen Anpresskräften die Haltekräfte sein.

Die steilen Flanken sollten allerdings um nicht mehr als 5 Grad von der Flächennormalen abweichen.

Im Folgenden wird die Erfindung anhand von Ausführungsbeispielen näher erläutert.

Es zeigen:
- Fig.1:: ein Prinzipbild der Erfindung;
- Fig.2:: eine Seitenansicht eines Ausführungsbeispiels mit ergänzenden Handbetätigungen;

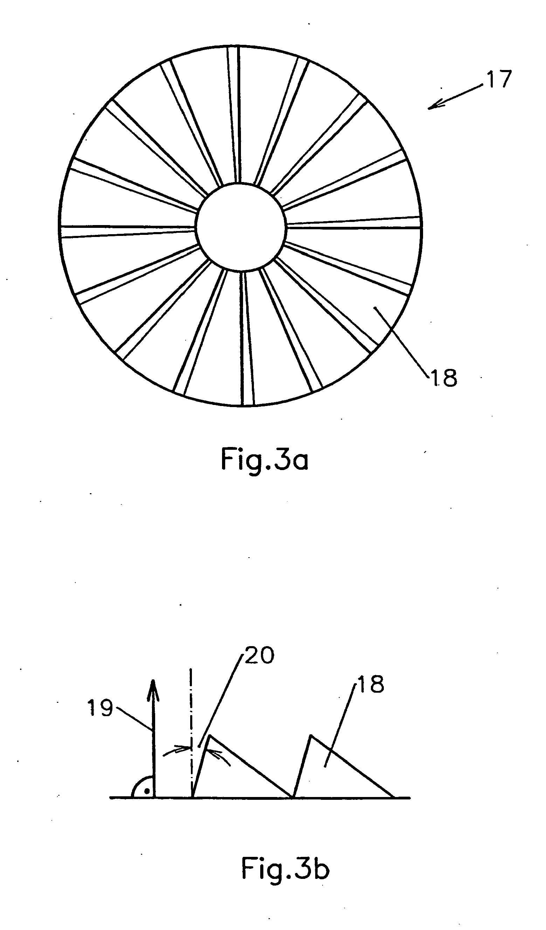

- Fig.3a:: eine Verzahnung;
- Fig.3b:: die Verzahnung gemäß Fig.3a in Abwicklung.

Sofern im Folgenden nichts anderes gesagt ist, gilt die folgende Beschreibung stets für alle Figuren:

Die Figuren zeigen eine Sicherheitsbremse 1 nach vorliegender Erfindung.

An einem Bremsstator 2 ist ein Bremsrotor 3 drehbar gelagert.

Zwischen einander korrespondierenden Flächen des Bremsrotors und Bremsstators ist ein Kupplungsstück 4 axial verschieblich zwischen einer Bremsstellung 6 und einer Freigabestellung 7.

Zur Verlagerung des Kupplungsstücks 4 in die Bremsstellung 6 dient eine Vorlastfeder 5, bzw. ein System von entsprechend angeordneten Vorlastfedern.

Unter der Kraft dieser Vorlastfedern wird das Kupplungsstück 4 zwangsläufig in die Bremsstellung 6 verlagert, sobald die Bremse geschlossen werden soll.

Wird das Kupplungsstück 4 hingegen aus der Bremsstellung 6 in die Freigabestellung 7 verlagert, geschieht dies gegen die zunehmenden Rückstellkräfte der Vorlastfedern 5.

Wesentlich ist nun, dass das Kupplungsstück 4 in der als Freigabestellung 7 bezeichneten Endstellung gegen die Kraft der Vorlastfeder 5 durch einen magnetischen Haltekraftgeber gehalten wird.

Der magnetische Haltekraftgeber 8 ist derart in das metallische Gehäuse des Bremsstators 2 integriert, dass seine von ihm erzeugten magnetischen Kraftlinien auch das Kupplungsstück 4 durchdringen, welches ebenfalls aus magnetischem Material besteht, wie der Bremsstator 2 auch.

Der magnetische Haltekraftgeber 8 übt daher auf das Kupplungsstück 4 eine gegen die Kraft der Vorlastfedern 5 wirkende magnetische Anziehungskraft aus, die jedoch nicht genügt, um die Kraft der Vorlastfedern 5 zu überwinden.

Auf diese Weise wird erreicht, dass das Kupplungsstück 4 stets dann in der Bremsstellung 6 verharrt, wenn es nicht in der anderen Richtung durch eine entsprechende Entriegelungskraft beaufschlagt wird.

Der magnetische Haltekraftgeber 8 ist als feromagnetischer Permanentmagneten ausgebildet.

Hier ist der Permanentmagnet 9 als ein L-förmig profilierter Magnetring ausgebildet, der mit seinem Außenumfang fest in einer entsprechenden Bohrung des Bremsstators sitzt.

Wird nun das Kupplungsstück 4 in die als Freigabestellung 7 bezeichnete Endstellung verlagert, liegt es hier an einer von den Feldlinien des magnetischen Haltekraftgebers 8 durchflossenen Haltefläche 10 an.

Es entsteht hier eine praktisch fugenlose Anlage des Kupplungsstücks 4 an der Haltefläche 10, so dass die größtmögliche magnetische Anziehungskraft zwischen Kupplungsstück 4 und Bremsstator 2 erzielt wird.

Zur Verlagerung des Kupplungsstücks 4 aus der Bremsstellung 6 in die Freigabestellung 7 dient ein Entriegelungskraftgeber 11, der durch einen entsprechenden Impuls so beaufschlagt wird, dass eine impulsförmige Entriegelungskraft das Kupplungsstück 4 beaufschlagt.

Im vorliegenden Fall ist als Entriegelungskraftgeber 11 eine sogenannte Entriegelungsspule vorgesehen, die den Bremsrotor ringförmig mit Abstand umgibt und mit dem Gehäuse des Bremsstators 2 unmittelbar in Verbindung steht.

Bei kurzzeitigem Beaufschlagen der Entriegelungsspule mit einem Spannungsimpuls wird daher das Kupplungsstück 4 gegen die Kraft der Vorlastfedern 5 in Richtung zum magnetischen Haltekraftgeber 8 bewegt.

Dabei wird der Luftspalt zwischen dem Kupplungsstück 4 und dem Permanentmagnet 9 zusehends verringert und das Kupplungsstück 4 immer weiter in Richtung zum Permanentmagneten 9 angezogen.

Durch die flächige Anlage des Kupplungsstücks 4 an der Haltefläche 10 des Bremsstators 2 erreicht somit das Kupplungsstück 4 seine als Freigabestellung 7 bezeichnete andere Endstellung.

Um das Kupplungsstück 4 in die als Bremsstellung 6 bezeichnete vorherige Endstellung zurückzuverlagern, dient ein Verriegelungskraftgeber 12, der vorzugsweise ebenfalls eine nur impulsartige Verriegelungskraft auf das Kupplungsstück 4 ausübt.

Im vorliegenden Fall wird als Verriegelungskraftgeber 12 eine sogenannte Verriegelungsspule verwenden, die ebenfalls kurzzeitig in einen Stromkreis eingebunden werden kann.

So lange der Strom durch die Spule fließt, erzeugt diese einen in Richtung zur Bremsstellung 6 wirkenden Kraftimpuls auf das Kupplungsstück 4, welche ausreichend groß bemessen ist, um die Kräfte an der Haltefläche 10 zu überwinden.

Danach steht das Kupplungsstück 4 nur noch, d.h. vorwiegend, unter dem Einfluss der Vorlastfedern 5 und wird sicher in die als Bremsstellung 6 bezeichnete Endstellung verlagert, die auch als Sicherheitsstellung der Sicherheitsbremse bezeichnet werden kann.

Sind darüber hinaus die auf das Kupplungsstück 4 wirkenden Komponenten der Magnetfelder von Entriegelungsspule und Verriegelungsspule im wesentlichen gleich groß, jedoch von sich gegenseitig neutralisierender Richtung, kann durch gleichzeitiges Schalten beider elektrischen Spulen die aktuelle Lage, die Geschwindigkeit und Beschleunigung des Kupplungsstücks 4 nicht beeinflusst werden.

Eine Änderung der aktuellen Position des Kupplungsstücks 4 durch ein versehentliches Schalten von Verriegelungsspule und gleichzeitig Entriegelungsspule ist daher ausgeschlossen.

Dies kann dadurch erreicht werden, dass Entriegelungsspule und Verriegelungsspule Gegenstand einer einzigen Spulenanordnung sind mit einem umpolbaren Schaltkreis.

Im vorliegenden Fall jedoch sind Entriegelungsspule und Verriegelungsspule zwei separate Bauteile, die jeweils in einen eigenen Stromkreis eingebunden sind.

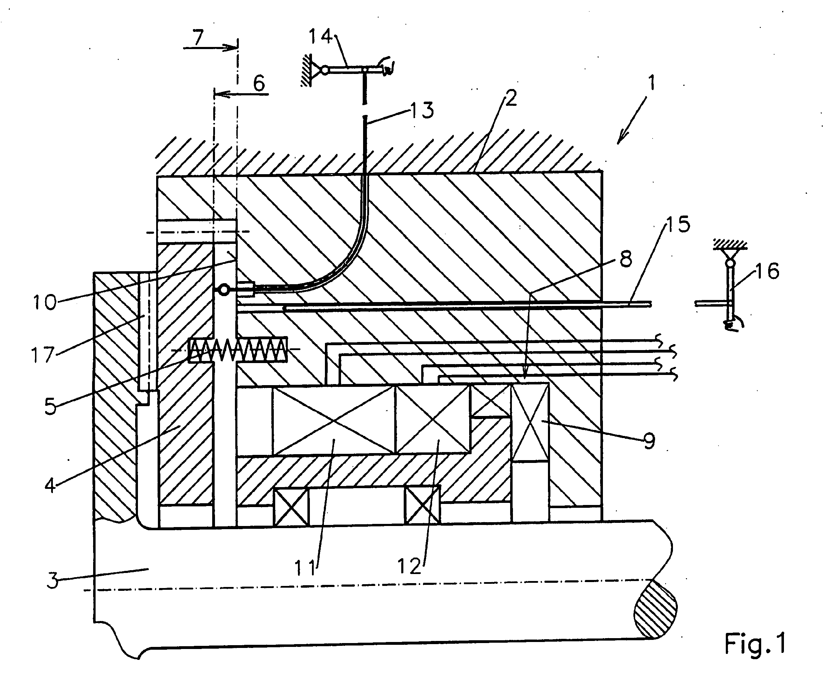

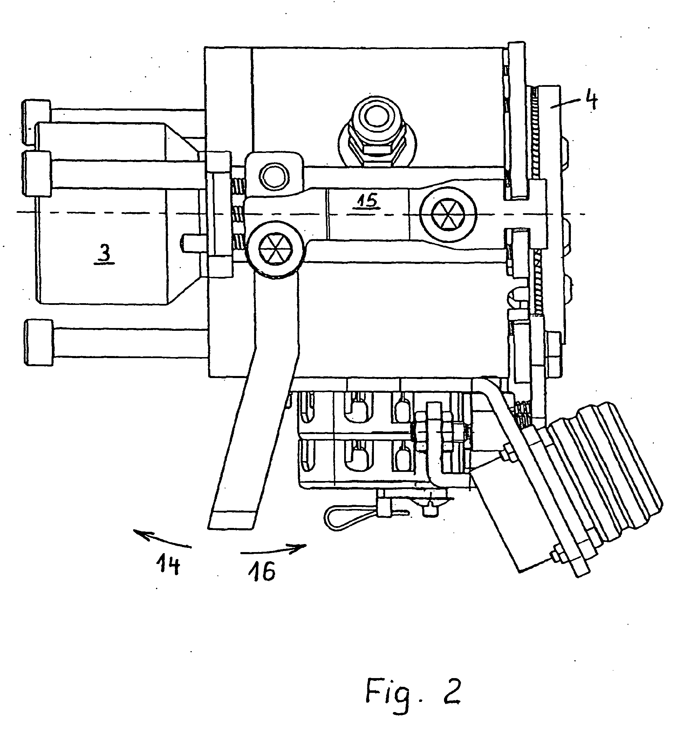

Darüber hinaus zeigt Fig.1 zusammen mit Fig.2 das zur Verlagerung des Kupplungsstücks 4 von der Bremsstellung 6 in die Freigabestellung 7 zwei unterschiedliche Entriegelungskraftgeber vorgesehen sind, die parallel am Kupplungsstück 4 angreifen.

Beide Entriegelungskraftgeber 11,13 sind voneinander unabhängig.

Über den bereits beschriebenen Entriegelungskraftgeber 11 hinaus ist - hier - noch ein Bodenzug vorgesehen, mit dessen Hilfe das Kupplungsstück 4 aus der Bremsstellung gelöst werden kann.

Dies erfolgt zweckmäßigerweise über eine entsprechende Handbetätigung 14.

Dies gilt sinngemäß auch für einen zweiten Verriegelungskraftgeber 15, mit dessen Hilfe das Kupplungsstück 4 aus der als Freigabestellung 7 bezeichneten Endposition in die Bremsstellung 6 zurückverlagert werden kann.

Hierfür genügt ein kurzer Anstoß des Kupplungsstücks 4, so dass die Kraft der Vorlastfedern dann zur vollständigen Verlagerung in die Bremsstellung 6 dient.

Hier ist als ergänzender Verriegelungskraftgeber ein Druckstift vorgesehen, der auf geeignete Art und Weise auf das Kupplungsstück 4 einwirkt.

Ergänzend kann auch hier eine separate Handbetätigung 16 für den weiteren Verriegelungskraftgeber vorgesehen sein.

Ergänzend hierzu zeigt Fig.2 ein Ausführungsbeispiel, bei welchem eine einzige Handbetätigung für beide Richtungen vorgesehen ist.

Im vorliegenden Fall ist darüber hinaus die Sicherheitsbremse als Zahnhaltebremse ausgebildet.

Dies bedeutet, dass zwischen Kupplungsstück 4 und Bremsrotor 3 oder, je nach Bauweise auch den Bremsstator 2, eine in Bremsstellung gegenseitig ineinander greifende Verzahnung 17 vorgesehen ist.

Die Verzahnung ist hier als sich radial erstreckende Verzahnung auf entsprechenden Ringflächen des Bremsrotors bzw. des Kupplungsstücks 4 ausgebildet.

Es handelt sich um eine sogenannte Sägeverzahnung, bei welcher die einzelnen Sägezähne eine flache und eine gegenüberliegende steile Flanke aufweisen.

In Richtung der flachen Zahnflanke lässt diese Zahnhaltebremse also eine gewisse Ratschenfunktion zu, während in der entgegensetzten Drehrichtung des Bremsrotors die steilen Zahnflanken sich gegenüberliegen und deshalb bereits bei geringen Kräften durch die Vorlastfedern eine erhebliche Bremsfunktion hervorrufen.

Dabei sollten die steilen Flanken der Sägezähne 18 um nicht mehr als 5 Grad von der Flächennormalen 19 abweichen.

Eine derartige Sicherheitsbremse, insbesondere in Verbindung mit sägezahnförmig ausgebildeten Zahnflanken, die sich radial am Bremsrotor kreisringförmig erstrecken, ist besonders geeignet zum Halten von Türen in Eisenbahnwagons, weil eine unerlaubte Öffnungsbewegung infolge der steilen Zahnflanken nicht möglich ist, während hingegen über die Ratschenfunktion der Sicherheitsbremse ein Schließen der Tür zwangsläufig ist.

Die kleine Bauweise mit der zuverlässigen bistabilen Positionierung des Kupplungskörpers 4 ist aufgrund des verwendeten Permanentmagneten praktisch wartungsfrei und kann auch als kompakte Baueinheit in großen Stückzahlen hergestellt und geliefert werden.

### Bezugszeichenliste

- 1: Sicherheitsbremse
- 2: Bremsstator
- 3: Bremsrotor
- 4: Kupplungsstück
- 5: Vorlastfeder
- 6: Bremsstellung
- 7: Freigabestellung
- 8: Haltekraftgeber
- 9: feromagnetischer Permanentmagnet
- 10: Haltefläche
- 11: Entriegelungskraftgeber
- 12: Verriegelungskraftgeber
- 13: zweiter Entriegelungskraftgeber
- 14: Handbetätigung
- 15: zweiter Verriegelungskraftgeber
- 16: Handbetätigung
- 17: Verzahnung
- 18: Sägezahn
- 19: Flächennormale
- 20: Abweichungswinkel

## Patentansprüche

1. Sicherheitsbremse (1) mit Bremsstator (2) und Bremsrotor (3) und einem zwischen Bremsrotor (3) und Bremsstator (2) vorgesehenen Kupplungsstück (4), welches in Richtung zur Bremsstellung (6) unter Kraft einer Vorlastfeder (5) steht und mittels Verlagerungskraftgeber aus der Bremsstellung (6) gegen zunehmende Federkraft der Vorlastfeder (5) in eine als Freigabestellung (7) bezeichnete Endstellung verlagerbar ist, wobei das Kupplungsstück (4) in der als Freigabestellung (7) bezeichneten Endstellung gegen die Kraft der Vorlastfeder (5) durch einen magnetischen Haltekraftgeber (8) gehalten wird der ein ferromagnetischer Permanentmagnet (9) ist, **dadurch gekennzeichnet, dass** zur Verlagerung des Kupplungsstücks (4) von der Freigabestellung (7) in die Bremsstellung (6) wenigstens zwei unterschiedliche Verriegelungskraftgeber (12,15) vorgesehen sind, die parallel und voneinander unabhängig am Kupplungsstück (4) angreifen und von denen einer als Handbetätigung (16) ausgebildet ist.

2. Sicherheitsbremse (1) nach einem der Anspruch 1, **dadurch gekennzeichnet, dass** zur Verlagerung des Kupplungsstücks von der Bremsstellung (6) in die Freigabestellung (7) mindestens zwei unterschiedliche Entriegelungskraftgeber (11,13) vorgesehen sind, die parallel und voneinander unabhängig vom Kupplungsstück (4) angreifen und von denen einer als Handbetätigung (14) ausgebildet ist.

3. Sicherheitsbremse (1) nach Anspruch 1 und 2, **dadurch gekennzeichnet, dass** lediglich eine einzige Handbetätigung (14,16) vorgesehen ist für beide Richtungen.

4. Sicherheitsbremse (1) nach Anspruch 3, **dadurch gekennzeichnet, dass** die Handbetätigung (14,16) mit dem Kupplungsstück (4) über ein Gestänge oder vorzugsweise über einen Bodenzug verbunden ist.

5. Sicherheitsbremse (1) nach einem der Ansprüche 2 bis 4 **dadurch gekennzeichnet, dass** zwischen Kupplungsstück (4) und Bremsrotor (3) oder, je nach Bauweise dem Bremsstator (2) eine in Bremsstellung (6) gegenseitig ineinandergreifende Verzahnung (17) vorgesehen ist.

6. Sicherheitsbremse (1) nach Anspruch 5, **dadurch gekennzeichnet, dass** die Verzahnung (17) in Form von Sägezähnen (18) ausgebildet ist, die eine flache und gegenüberliegend eine steile Flanke aufweisen.

7. Sicherheitsbremse (1) nach Anspruch 6, **dadurch gekennzeichnet, dass** die steilen Flanken der Sägezähne (18) um nicht mehr als 5 Grad von der Flächennormalen (19) abweichen (20).

8. Sicherheitsbremse (1) nach einem der Ansprüche 1 oder 7, **dadurch gekennzeichnet, dass** das Kupplungsstück (4) in der als Freigabestellung (7) bezeichneten Endstellung an einer von den Feldlinien des magnetischen Haltekraftgebers (8) durchflossenen Haltefläche (10) des Bremsstators (2) unter Kontakt anliegt.

9. Sicherheitsbremse (1) nach einem der Ansprüche 1 bis 8, **dadurch gekennzeichnet, dass** die Verlagerung des Kupplungsstücks (4) von der Bremsstellung (6) in die als Freigabestellung (7) bezeichnete Endstellung durch eine impulsartige Entriegelungskraft eines Entriegelungskraftgebers (11) ausgelöst wird, die nach Zeitdauer und Größe so bemessen ist, dass das Kupplungsstück am Ende dieses Kraftimpulses vorwiegend unter dem Krafteinfluss des magnetischen Haltekraftgebers (8) steht.

10. Sicherheitsbremse (1) nach Anspruch 9, **dadurch gekennzeichnet, dass** zur Erzeugung des Kraftimpulses eine Entriegelungsspule als Entriegelungskraftgeber (11) vorgesehen ist, die in einen kurzzeitig schließbaren Stromkreis eingebunden ist.

11. Sicherheitsbremse (1) nach einem der Ansprüche 1 bis 10, **dadurch gekennzeichnet, dass** die Verlagerung des Kupplungsstücks (4) von der als Freigabestellung (7) bezeichneten Endstellung in die Bremsstellung (6) durch eine impulsartige Verriegelungskraft eines Verriegelungskraftgebers (12) ausgelöst wird, die nach Zeitdauer und Größe so bemessen ist, dass das Kupplungsstück (4) am Ende dieses Kraftimpulses vorwiegend unter dem Krafteinfluss der Vorlastfeder (5) steht.

12. Sicherheitsbremse (1) nach Anspruch 11, **dadurch gekennzeichnet, dass** zur Erzeugung des Kraftimpulses eine Verriegelungsspule als Verriegelungskraftgeber (12) vorgesehen ist, die in einen kurzzeitig schließbaren Stromkreis eingebunden ist.

13. Sicherheitsbremse (1) nach Anspruch 10 und 12, **dadurch gekennzeichnet, dass** die Magnetfelder von Entriegelungsspule und Verriegelungsspule im wesentlichen gleich groß, jedoch von sich gegenseitig neutralisierender Richtung sind.

14. Sicherheitsbremse (1) nach Anspruch 10 und 12, **dadurch gekennzeichnet, dass** Entriegelungsspule und Verriegelungsspule von einer einzigen Spulenanordnung gebildet werden, die in einen umpolbaren Stromkreis eingebunden ist.

## Claims

1. Safety brake (1) having a brake stator (2) and brake rotor (3) and a coupling piece (4) which is provided between the brake rotor (3) and brake stator (2) and which, in the direction towards the braking position (6), is subject to the force of a preloading spring (5), and, by means of a displacement force generator, can be displaced out of the braking position (6) against increasing spring force of the preloading spring (5) into an end position designated as the release position (7), wherein the coupling piece (4) is held in the end position designated as the release position (7) against the force of the preloading spring (5) by a magnetic holding force generator (8) which is a ferromagnetic permanent magnet (9), **characterised in that** in order to displace the coupling piece (4) from the release position (7) into the braking position (6) at least two different locking force generators (12, 15) are provided, which in a parallel and mutually independent manner engage with the coupling piece (4) and of which one is formed as a manually operated device (16).

2. Safety brake (1) as claimed in any one of claim 1 *[sic]*, **characterised in that** in order to displace the coupling piece from the braking position (6) into the release position (7) at least two different unlocking force generators (11, 13) are provided, which in a parallel and mutually independent manner engage from *[sic]* the coupling piece (4) and of which one is formed as a manually operated device (14).

3. Safety brake (1) as claimed in claim 1 and 2, **characterised in that** only a single manually operated device (14, 16) is provided for both directions.

4. Safety brake (1) as claimed in claim 3, **characterised in that** the manually operated device (14, 16) is connected to the coupling piece (4) via a linkage or preferably via a Bowden cable.

5. Safety brake (1) as claimed in any one of claims 2 to 4, **characterised in that** between the coupling piece (4) and the brake rotor (3) or, depending on the manner of construction, the brake stator (2), toothing (17) is provided, which is in mutual engagement in the braking position (6).

6. Safety brake (1) as claimed in claim 5, **characterised in that** the toothing (17) is formed in the manner of saw teeth (18) which have a shallow flank and an opposite steep flank.

7. Safety brake (1) as claimed in claim 6, **characterised in that** the steep flanks of the saw teeth (18) deviate (20) from the surface normals (19) by not more than 5 degrees.

8. Safety brake (1) as claimed in any one of claims 1 or 7, **characterised in that**, in the end position designated as the release position (7), the coupling piece (4) lies in contact with a holding surface (10) of the brake stator (2), through which the field lines of the magnetic holding force generator (8) pass.

9. Safety brake (1) as claimed in any one of claims 1 to 8, **characterised in that** the displacement of the coupling piece (4) from the braking position (6) into the end position designated as the release position (7) is triggered by a pulse-like unlocking force of an unlocking force generator (11), which in terms of duration and magnitude is such that, at the end of this force pulse, the coupling piece is predominantly subject to the force influence of the magnetic holding force generator (8).

10. Safety brake (1) as claimed in claim 9, **characterised in that** in order to produce the force pulse an unlocking coil is provided as an unlocking force generator (11) and is incorporated into an electric circuit which can be closed briefly.

11. Safety brake (1) as claimed in any one of claims 1 to 10, **characterised in that** the displacement of the coupling piece (4) from the end position designated as the release position (7) into the braking position (6) is triggered by pulse-like locking force of a locking force generator (12), which in terms of duration and magnitude is such that, at the end of this force pulse, the coupling piece (4) is predominantly subject to the force influence of the preloading spring (5).

12. Safety brake (1) as claimed in claim 11, **characterised in that that** in order to produce the force pulse a locking coil is provided as a locking force generator (12) and is incorporated into an electric circuit which can be closed briefly.

13. Safety brake (1) as claimed in claim 10 and 12, **characterised in that** the magnetic fields of the unlocking coil and locking coil are substantially equal in size but are directed so as to cancel each other out.

14. Safety brake (1) as claimed in claim 10 and 12, **characterised in that** the unlocking coil and locking coil are formed from a single coil arrangement which is incorporated into an electric circuit with reversible polarity.

## Revendications

1. Frein de sécurité (1) avec un stator de frein (2) et un rotor de frein (3), et un élément d'accouplement (4) qui est prévu entre le rotor de frein (3) et le stator de frein (2), qui est soumis à la force d'un ressort de contrainte (5) en direction de la position de freinage (6) et qui est apte à être amené à l'aide d'un générateur de force de déplacement de la position de freinage (6), à l'encontre d'une force croissante du ressort de contrainte (5), dans une position de fin de course appelée position de déblocage (7), l'élément d'accouplement (4) étant maintenu dans la position de fin de course appelée position de déblocage (7) à l'encontre de la force du ressort de contrainte (5) par un générateur de force de retenue magnétique (8) qui est constitué par un aimant permanent ferromagnétique (9), **caractérisé en ce que** pour amener l'élément d'accouplement (4) de la position de déblocage (7) à la position de freinage (6), il est prévu au moins deux générateurs de force de verrouillage différents (12, 15) qui agissent parallèlement et indépendamment l'un de l'autre sur l'élément d'accouplement (4), l'un étant conçu comme une commande manuelle (16).

2. Frein de sécurité (1) selon la revendication 1, **caractérisé en ce que** pour amener l'élément d'accouplement de la position de freinage (6) à la position de déblocage (7), il est prévu au moins deux générateurs de force de déverrouillage différents (11, 13) qui agissent parallèlement et indépendamment l'un de l'autre sur l'élément d'accouplement (4), l'un étant conçu comme une commande manuelle (14).

3. Frein de sécurité (1) selon les revendications 1 et 2, **caractérisé en ce qu'**il n'est prévu qu'une seule commande manuelle (14, 16) pour les deux directions.

4. Frein de sécurité (1) selon la revendication 3, **caractérisé en ce que** la commande manuelle (14, 16) est reliée à l'élément d'accouplement (4) par une tringlerie ou de préférence par un câble sous gaine.

5. Frein de sécurité (1) selon l'une des revendications 2 à 4, **caractérisé en ce qu'**il est prévu entre l'élément d'accouplement (4) et le rotor de frein (3) ou, suivant la construction, le stator de frein (2), une denture (17) qui s'engrène mutuellement, dans la position de freinage (6).

6. Frein de sécurité (1) selon la revendication 5, **caractérisé en ce que** la denture (17) est conçue comme des dents de scie (18) qui présentent une surface plate et, en face, un flanc à forte pente.

7. Frein de sécurité (1) selon la revendication 6, **caractérisé en ce que** les flancs à forte pente des dents de scie (18) s'écartent (20) de la normale de surface (19) de plus de 5 degrés.

8. Frein de sécurité (1) selon l'une des revendications 1 ou 7, **caractérisé en ce que** l'élément d'accouplement (4), dans la position de fin de course appelée position de déblocage (7), est en contact avec la surface de retenue (10) du stator de frein (2) qui est traversée par les lignes de champ du générateur de force de retenue magnétique (8).

9. Frein de sécurité (1) selon l'une des revendications 1 à 8, **caractérisé en ce que** le déplacement de l'élément d'accouplement (4) de la position de freinage (6) vers la position de fin de course appelée position de déblocage (7) est déclenché par une force de déverrouillage sous forme d'impulsion d'un générateur de force de déverrouillage (11), dont la durée et le degré sont calculés pour que l'élément d'accouplement, à la fin de cette impulsion de force, soit soumis principalement à l'influence du générateur de force de retenue magnétique (8).

10. Frein de sécurité (1) selon la revendication 9, **caractérisé en ce que** pour produire l'impulsion de force, il est prévu comme générateur de force de déverrouillage (11) une bobine de déverrouillage qui est intégrée dans un circuit apte à être fermé temporairement.

11. Frein de sécurité (1) selon l'une des revendications 1 à 10, **caractérisé en ce que** le déplacement de l'élément d'accouplement (4) de la position de fin de course appelée position de déblocage (7) vers la position de freinage (6) est déclenché par une force de verrouillage sous forme d'impulsion d'un générateur de force de verrouillage (12), dont la durée et le degré sont calculés pour que l'élément d'accouplement (4), à la fin de cette impulsion de force, soit soumis principalement à l'influence de la force du ressort de contrainte (5).

12. Frein de sécurité (1) selon la revendication 11, **caractérisé en ce que** pour produire l'impulsion de force, il est prévu comme générateur de force de verrouillage (12) une bobine de verrouillage qui est intégrée dans un circuit apte à être fermé temporairement.

13. Frein de sécurité (1) selon les revendications 10 et 12, **caractérisé en ce que** les champs magnétiques de la bobine de déverrouillage et de la bobine de verrouillage sont sensiblement égaux, mais dans des sens qui se neutralisent mutuellement.

14. Frein de sécurité (1) selon les revendications 10 et 12, **caractérisé en ce que** la bobine de déverrouillage et la bobine de verrouillage sont formées par un seul dispositif de bobine, qui est intégré dans un circuit à inversion de polarité.
